(19) Europäisches Patentamt
European Patent Office
Office européen des brevets

(11) **EP 1 477 525 B1**

(12) **EUROPEAN PATENT SPECIFICATION**

(45) Date of publication and mention
of the grant of the patent:
**15.12.2010 Bulletin 2010/50**

(51) Int Cl.:
***C08L 23/10*** *(2006.01)*

(21) Application number: **03010871.6**

(22) Date of filing: **15.05.2003**

(54) **Polyolefin composition**

Polyolefin-Zusammensetzung

Composition de polyoléfine

(84) Designated Contracting States:
**AT BE BG CH CY CZ DE DK EE ES FI FR GB GR HU IE IT LI LU MC NL PT RO SE SI SK TR**

(43) Date of publication of application:
**17.11.2004 Bulletin 2004/47**

(73) Proprietor: **Borealis Technology Oy**
**06201 Porvoo (FI)**

(72) Inventors:
• **Seitl, Erich, Ing.**
  **4060 Leonding (AT)**
• **Dipl.-Ing.Dr.Berger, Friedrich**
  **4030 Linz (AT)**
• **Kniesel, Claudia, Ing.**
  **4060 Leonding (AT)**
• **Bernreitner, Klaus, Dipl.-Ing.**
  **4010 Linz (AT)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 1 211 289    EP-A- 1 236 769**
**EP-A- 1 344 793    FR-A- 2 729 963**

**Description**

The present invention relates to a novel polyolefin composition having a low coefficient of thermal expansion and good impact strength. More particularly the invention relates to a polyolefin composition which comprises a heterophasic propylene copolymer and a small amount of inorganic filler, with an improved balance of thermal dimensional stability and impact strength at temperatures both above and below room temperature.
The polyolefin compositions of the invention are especially useful for automotive applications where high mechanical requirements and low thermal expansion must be simultaneously met, e.g. for bumpers and fenders.

**Background of the invention**

Modern polymer materials for exterior automotive parts are often comprised of polyolefins, especially polypropylene, because of its excellent mechanical strength. However, since it is poor in impact resistance, its heterophasic copolymers such as propylene-$\alpha$-olefin block copolymers are used.
A further requirement for automotive parts is a low Coefficient of Linear Thermal Expansion (CLTE). Without a low CLTE bumpers made of such polymer materials would be easily deformed due to the difference between their CLTE and that of the automotive body parts. A low CLTE of polypropylene is achieved with an inorganic filler such as talc.
A still further requirement for automotive parts is light weight. While it is possible to achieve a still lower CLTE with higher filler contents, this increases the density of the polypropylene. The weight of automotive parts and therefore also the fuel consumption of automobiles where such parts were used, is increased.
EP-A-1 236 769 describes a heterophasic propylene polymer composition comprising 60 to 90 wt% of a propylene polymer matrix, 5 to 30 wt% of an elastomer and 5 to 25 wt% of an ethylene copolymer plastomer.
JP 09-031259 A describes a polyolefin elastomer composition for a long injection molded product comprising an elastomer comprising crystalline polypropylene and ethylene-$\alpha$-olefin rubber and talc.

Object of the Invention

It is therefore the object of the invention to provide a polyolefin composition having an improved balance of impact strength, low CLTE and density.

Detailed Description of the Invention

The object of the present invention is solved on the basis of claims 1 to 7.
The object of the invention has been achieved with a polyolefin composition, which comprises a heterophasic propylene copolymer and an inorganic filler, were the intrinsic viscosity of the disperse phase of the heterophasic copolymer does not exceed a certain limit.
The present invention therefore relates to a polyolefin composition, which polyolefin composition comprises

(A) 90 - 99 wt% of a heterophasic propylene copolymer containing

a) 60 - 80 wt% of a matrix phase comprising a propylene homopolymer or a propylene copolymer with up to 5 mol% of ethylene and/or at least one $C_4$-$C_8$ $\alpha$-olefin and
b) 20-40 wt% of a disperse phase comprising an ethylene rubber copolymer with from 20 - 80 mol% ethylene and from 80 - 20 mol% of at least one $C_3$-$C_8$ $\alpha$-olefin,

where the intrinsic viscosity of the XCS-fraction of the heterophasic copolymer is $\leq$ 2.0 dl/g and
(B) 1 - 10 wt% of an inorganic filler,

wherein the composition does not contain a $\beta$-nucleating agent.
It has surprisingly been observed, that the polyolefin composition of the present invention is light weight due to a reduced filler content and also shows good impact strength, good tensile strength and low CLTE. Impact and tensile strength and CLTE of the polyolefin compositions of the invention are comparable to known polypropylene compositions with much higher filler contents. The heterophasic propylene copolymer used in the polyolefin compositions of the invention contains a substantial proportion of low molecular weight rubber (IV of XCS $\leq$ 2 dl/g).
For the ethylene rubber copolymer the ethylene content may range from 20-80 mol% preferably from 30-70 mol%, more preferably from 30-50 mol%. Accordingly, the $C_3$-$C_8$ $\alpha$-olefin content may range from 80-20 mol%, preferably from 70-30 mol%, more preferably from 70-50 mol%.
It is preferred for the XCS-fraction of the heterophasic copolymer to have an intrinsic viscosity of $\leq$ 1.8 dl/g,

more preferably $\leq$ 1.5 dl/g, most preferrred $\leq$ 1.0 dl/g.

The smaller the molecular weight of the XCS-fraction of the heterophasic copolymer, the smaller is its intrinsic viscosity. Although polyolefin compositions with smaller viscosity of the XCS-fraction show reduced mechanical properties, their CLTE is smaller as well.

The preferred range of amount of inorganic filler is from 1 - 5 wt%. Although there is no particular lower limit for the inorganic filler content, values below about 1 wt% do not have some of the aspired properties, especially low CLTE. Inorganic filler contents of up to 5 wt% are preferred, because they offer the b est compromise regarding mechanical properties, density and CLTE. Inorganic filler contents of $\leq$ 3 wt%, resulting in the lightest polyolefin compositions, are especially preferred.

As inorganic filler talc is preferred, but for example mica can be used as well. Any talc which is conventionally used to reinforce polypropylene may be employed. The used talc has preferably a topcut ($d_{95}$ value) below 20; most preferably below 10 $\mu$m.

According to a preferred embodiment the ethylene rubber copolymer is an ethylene propylene rubber (EPR) or an ethylene 1-octene rubber.

EPR's are more cost-effective than ethylene rubbers with higher $\alpha$-olefins and they are preferably synthesised in the second step of a two-step process, where in the first step the matrix polymer is synthesised or they can be mixed with the matrix polymer in a separate melt blending step.

According to a further preferred embodiment the heterophasic propylene copolymer contains 25-35 wt%, preferably 30 - 35 wt% of the ethylene rubber copolymer. These concentration ranges f or the ethylene rubber are preferred, because they offer a g ood compromise for a good stiffness/impact strength balance.

According to a still further embodiment the shrinkage and the content of inorganic filler of the polyolefin composition of the present invention obeys the following relation: shrinkage [%] $\leq$ 1.6 - (0.08 x amount of inorganic filler [wt%]).

Since the polyolefin compositions of the present invention show good mechanical properties, especially good flexural modulus and tensile strength, good impact strength and low CLTE, they are especially suited for the production for automotive parts, especially bumper fascia, side trims, rocker panel and fender.

The polyolefin compositions of the present invention may have any desired melt flow range. Usual values are from 2 - 120 g/10 min, preferably the MFR is $\leq$ 80 g/10 min and most preferably the MFR is from 5.0 - 60 g/10 min (230 °C, 2.16 kg).

The polyolefin composition of the present invention is preferably produced by melt mixing the heterophasic propylene copolymer base resin with 1 to 10 wt% based on the propylene copolymer used, of inorganic filler, optionally adding conventional additives and/or stabilisers, at temperatures from 175 to 250 °C and cooling and crystallising the melt according to procedures which are state of the art.

The heterophasic propylene copolymer may be produced by multistage process polymerisation of propylene or propylene and ethylene and/or an $\alpha$-olefin such as bulk polymerisation, gas phase polymerisation, slurry polymerisation, solution polymerisation or combinations thereof using conventional catalysts. Those processes are well known to one skilled in the art.

A preferred process is a combination of a bulk slurry loop reactor(s) and gas phase reactor(s). The matrix polymer can be made either in loop reactors or in a combination of loop and gas phase reactor.

The polymer produced in this way is transferred into another reactor and the disperse phase, which in this case is a propylene/$\alpha$-olefin rubber, is polymerised. Preferably this polymerisation step is done in a gas phase polymerisation.

A suitable catalyst for the polymerisation of the heterophasic copolymer is any stereospecific catalyst for propylene polymerisation which is capable of polymerising and copolymerising propylene and comonomers at a temperature of 40 to 110°C and at a pressure form 10 to 100 bar. Ziegler Natta catalysts as well as metallocene catalysts are suitable catalysts.

One skilled in the art is aware of the various possibilities to produce such heterophasic systems and will simply find out a suitable procedure to produce suitable heterophasic polymer systems which are used in the present invention.

The heterophasic propylene copolymer may also be produced by mixing and melt blending a propylene homopolymer with an ethylene rubber copolymer.

**Description of measurement methods**

**XCS**

Xylene cold solubles were determined at 23 °C according ISO 6427. Xylene solubles are defined as the percent by weight that stays in solution after the polymer sample is dissolved in hot xylene and the solution is allowed to cool to 23 °C. XCS largely corresponds to the rubber content of the heterophasic copolymer.

**MFR**

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

**Flexural Modulus**

The flexural test was carried out according to the method of ISO 178 by using injection moulded test specimens as described in EN ISO 1873-2 (80 x 10 x 4 mm).

**Charpy notched impact strength**

The Charpy notched impact strength was determined according to ISO 179 / 1eA at 23 °C, -20 °C and at -40 °C by using injection moulded test specimens as described in EN ISO 1873-2 (80 x 10 x 4 mm).

**Intrinsic Viscosity**

Intrinsic Viscosity was measured according to DIN ISO 1628-1 (October 1999) in Decalin at 135 °C.

**CLTE**

The Coefficient of Linear Thermal Expansion was determined according to DIN 53752 by using injection moulded test specimens with dimensions of 80 mm x 10 mm x 4 mm.

**Shrinkage**

Moulding Shrinkage was determined on an injection moulded disc with a diameter of 180 mm and a thickness of 3 mm. The disc was moulded with the following conditions: melt temperature 260 °C; mould temperature 30 °C and flow front velocity 100 mm/sec. The shrinkage is measured in flow direction and perpendicular thereto.

**Examples**

Heterophasic polymers:

The heterophasic polymers 1-4 were produced by mixing and melt blending of a propylene homopolymer with one or two ethylen 1-octene copolymers. Polymer 5 was produced in a two step process. In the first step a propylene homopolymer (matrix phase) was polymerised in liquid propylene and in the second stage a propylene/ethylene rubber (disperse phase) was polymerised in a gas phase reactor. As catalyst a Ziegler-Natta catalyst system was used.

The characteristics of the heterophasic polymers are given in table 1.

**Table 1**

| polymer | polymer split | | MFR1 | XCS1 | MFR2 | XCS2 | C2 total | C2/ XCS2 | IV/ XCS2 |
|---|---|---|---|---|---|---|---|---|---|
| | matrix [wt%] | disperse [wt%] | [g/10'] | [wt%] | [g/10'] | [wt%] | [mol%] | [wt%] | [dl/g] |
| polymer 1 | 70 | 30 | 20 | 2 | 28 | 30 | 22,8 | 76 | 0,9 |
| polymer 2 | 70 | 30 | 20 | 2 | 18 | 30 | 22,8 | 76 | 1,2 |
| polymer 3 | 70 | 30 | 20 | 2 | 10 | 30 | 22,8 | 76 | 1,8 |
| polymer 4 | 70 | 30 | 20 | 2 | 23 | 30 | 22,8 | 76 | 1,2 |
| polymer 5 | 68 | 32 | 29 | 2 | 16 | 32 | 23 | 47,5 | 1,6 |
| polymer 6* | | | | | 6 | 30 | | | 3,1 |

(continued)

| polymer | polymer split | | MFR1 | XCS1 | MFR2 | XCS2 | C2 total | C2/ XCS2 | IV/ XCS2 |
| | matrix [wt%] | disperse [wt%] | [g/10'] | [wt%] | [g/10'] | [wt%] | [mol%] | [wt%] | [dl/g] |
|---|---|---|---|---|---|---|---|---|---|
| polymer 7* | | | | | 7 | 26 | | | 3,3 |

* Not according to the invention

| | |
|---|---|
| MFR1: | Melt Flow Rate of the matrix phase of the heterophasic copolymer |
| XCS1: | xylene cold soluble fraction of matrix phase of the heterophasic copolymer |
| MFR2: | Melt Flow Rate of the heterophasic copolymer |
| XCS2: | xylene cold soluble fraction of the heterophasic copolymer |
| C2 total: | total ethylene content of the heterophasic copolymer |
| C2/XCS2: | ethylene content of the xylene cold soluble fraction of the heterophasic copolymer |
| IV/XCS2: | Intrinsic viscosity of the xylene cold soluble fraction of the heterophasic copolymer |

Polymers 1 - 7 were mixed with conventional additives (0.1 % Irgafos 168, 0.1 % Irganox 1010, 0.1 % Ca-stearate, 0.3 % G lycerol monostearate) and the respective amounts of inorganic filler in an intensive mixer (Henschel mixer) for 25 seconds.

The compositions were compounded in a twin screw extruder at a temperature of 250 °C. The strands were quenched in cold water and pelletised.

Injection moulded test bars were produced and the Charpy notched impact strength according to ISO 179 and flexural modulus according to ISO 178 were measured.

The coefficient of linear thermal expansion (CLTE) was measured on injection moulded sheets (80 mm x 10 mm x 4 mm) according to DIN 53752 a nd the moulding shrinkage was measured on an injection moulded disc ($\varnothing$ 180 mm x 3 mm).

The results are shown in table 2.

**Table 2**

| example | polymer | inorg. filler | | MFR [g/10min] | Flex.Mod. [MPa] | NIS 23 °C [kJ/m$^2$] | NIS -20 °C [kJ/m$^2$] | NIS -40 °C [kJ/m$^2$] | CLTE [$\mu$m/m.K] | Density [g/cm$^3$] | Shrinkage [%] |
|---|---|---|---|---|---|---|---|---|---|---|---|
| | | amount [wt%] | filler | | | | | | | | |
| 1 | 1 | 2,0 | talc | 28 | 900 | 21 | 3,0 | 1,7 | 75 | 0,91 | 0,9 |
| 2 | 2 | 2,0 | talc | 18 | 1023 | 27 | 3,5 | 1,8 | 86 | 0,91 | 1,0 |
| 3 | 3 | 2,0 | talc | 10 | 1012 | 49 | 6,2 | 3,0 | 96 | 0,91 | 1,3 |
| 4 | 4 | 2,0 | talc | 24 | 1130 | 23 | 3,5 | 1,8 | 83 | 0,91 | 0,9 |
| 5 | 5 | 2,0 | talc | 16 | 1048 | 37 | 5,0 | 3,0 | 80 | 0,91 | 0,8 |
| 6 | 6 | 10,0 | talc | 6 | 1060 | 31 | 16,0 | 6,0 | 80 | 0,96 | 1,1 |
| 7 | 7 | - | - | 7 | 840 | 28 | 7,0 | 5,5 | 125 | 0,9 | 1,6 |

MFR:  MFR of the composition

Flex.Mod.:  Flexural Modulus acc. to ISO 178

NIS 23 °C:  Charpy notched impact strength acc. to ISO 179 eA at 23 °C

NIS -20 °C:  Charpy notched impact strength acc. to ISO 179 eA at -20 °C

NIS -40 °C:  Charpy notched impact strength acc. to ISO 179 eA at -40 °C

CLTE:  Coefficent of Linear Thermal Expansion acc. to DIN 53752 between 23 and 80 °C

**Claims**

1. Polyolefin composition with low coefficient of linear thermal expansion (CLTE); determined according to DIN 53752 and good impact strength and low density, having an MFR (measured according to ISO 1133 with a load of 2.16 kg at 230°C) of from 5.0 - 60 g/10 min, which polyolefin composition comprises

   (A) 90 - 99 wt% of a heterophasic propylene copolymer containing

      a) 60 - 80 wt% of a matrix phase comprising a propylene homopolymer or a propylene copolymer with up to 5 mol% of ethylene and/or at least one $C_4$ - $C_8$ $\alpha$-olefin and
      b) 20 - 40 wt% of a disperse phase comprising an ethylene rubber copolymer with from 20 - 80 mol% ethylene and from 80 - 20 mol% of at least one $C_3$-$C_8$ $\alpha$-olefin,

   where the intrinsic viscosity (measured according to DIN ISO 1628-1 (October 1999) in decalin at 135° C) of the XCS-fraction of the heterophasic copolymer is $\leq$ 2.0 dl/g and
   (B) 1 -10 wt% of an inorganic filler,

   wherein the composition does not contain a $\beta$-nucleating agent.

2. Polyolefin composition, according to claim 1, **characterized in that** the intrinsic viscosity of the XCS-fraction of the heterophasic copolymer is $\leq$ 1.8 dl/g, more preferably $\leq$ 1.5 dl/g, most preferred 1.0 dl/g.

3. Polyolefin composition according to claim 1 or 2, **characterized in that** the amount of inorganic filler is from 1 - 5 wt%.

4. Polyolefin composition according to one of claims 1 to 3, **characterized in that** the ethylene rubber copolymer is an ethylene propylene rubber (EPR) or ethylene 1-octene rubber.

5. Polyolefin composition according to one of claims 1 to 4, **characterized in that** the heterophasic propylene copolymer contains 30 - 35 wt% of the ethylene rubber copolymer.

6. Polyolefin composition according to any one of claims 1 to 5, **characterized by** a shrinkage value according to the relation

$$\text{shrinkage [\%]} \leq 1.6 - (0.08 \times \text{amount of inorganic filler [wt\%]}).$$

7. Use of a polyolefin composition according to one of claims 1 to 6 for the production of automotive parts, especially bumper fascia, side trims, rocker panel and fenders.

**Patentansprüche**

1. Polyolefinzusammensetzung mit geringem linearen thermischen Ausdehnungskoeffizienten (CLTE), bestimmt gemäß DIN 53752, und guter Schlagfestigkeit und geringer Dichte, die einen MFR (gemessen gemäß ISO 1133 mit einem Gewicht von 2,16 kg bei 230°C) von 5,0 - 60 g/10 min besitzt, und wobei die Polyolefinzusammensetzung umfasst,

   A) 90 - 99 Gew.-% eines heterophasischen Propylencopolymers, enthaltend

      a) 60 - 80 Gew.-% einer Matrixphase, die ein Propylenhomopolymer oder ein Propylencopolymer mit bis zu 5 mol% an Ethylen und/oder mindestens einem $C_4$ - $C_8$ $\alpha$-Olefin umfasst, und
      b) 20 - 40 Gew.-% einer dispersen Phase, die ein Ethylengummicopolymer mit 20 - 80 mol% an Ethylen und 80 - 20 mol% an mindestens einem $C_3$ - $C_8$ $\alpha$-Olefin umfasst,

   wobei die intrinsische Viskosität (gemessen gemäß DIN ISO 1628-1 (Oktober 1999) in Decalin bei 135°C) der XCS-Fraktion des heterophasischen Copolymers $\leq$ 2,0 dl/g ist und
   B) 1-10 Gew.-% eines anorganischen Füllstoffs,

wobei die Zusammensetzung kein β-Nukleierungsmittel enthält.

**2.** Polyolefinzusammensetzung gemäß Anspruch 1, **dadurch gekennzeichnet, dass** die intrinsische Viskosität der XCS-Fraktion des heterophasischen Copolymers ≤ 1,8 dl/g, mehr bevorzugt ≤ 1,5 dl/g, am meisten bevorzugt 1,0 dl/g, ist.

**3.** Polyolefinzusammensetzung gemäß Anspruch 1 oder 2, **dadurch gekennzeichnet, dass** die Menge an anorganischem Füllstoff 1 - 5 Gew.-% ist.

**4.** Polyolefinzusammensetzung gemäß einem der Ansprüche 1 bis 3, **dadurch gekennzeichnet, dass** das Ethylengummicopolymer ein Ethylenpropylengummi (EPR) oder Ethylen-1-octengummi ist.

**5.** Polyolefinzusammensetzung gemäß einem der Ansprüche 1 bis 4, **dadurch gekennzeichnet, dass** das heterophasische Propylencopolymer 30 - 35 Gew.-% des Ethylengummicopolymers enthält.

**6.** Polyolefinzusammensetzung gemäß einem der Ansprüche 1 bis 5, **gekennzeichnet durch** einen Schrumpfwert gemäß der Beziehung

$$\text{Schrumpf [\%]} \le 1,6 - (0,08 \times \text{Menge an anorganischem Füllstoff [Gew.-\%]}).$$

**7.** Verwendung einer Polyolefinzusammensetzung gemäß einem der Ansprüche 1 bis 6 für die Herstellung von Kraftfahrzeugteilen, bevorzugt Stoßfängerverkleidungen, Seitenverkleidungen, Schweller und Kotflügel.

**Revendications**

**1.** Composition de polyoléfine ayant un faible coefficient de dilatation thermique linéaire (CLTE), déterminé conformément à la norme DIN 53752, une bonne résistance aux chocs et une faible densité, ayant un indice MFR (mesuré conformément à la norme ISO 1133 avec une charge de 2,16 kg à 230°C) de 5,0 à 60 g/10 min, laquelle composition de polyoléfine comprend :

(A) de 90 à 99 % en poids d'un copolymère de propylène hétérophasique contenant :

a) de 60 à 80 % en poids, d'une phase matrice comprenant un homopolymère de propylène ou un copolymère de propylène avec jusqu'à 5 % en moles d'éthylène et/ou d'au moins une $\alpha$-oléfine en $C_4$ à $C_8$, et
b) de 20 à 40 % en poids d'une phase dispersée comprenant un copolymère de caoutchouc d'éthylène avec de 20 à 80 % en moles d'éthylène et de 80 à 20 % en moles d'au moins une $\alpha$-oléfine en $C_3$ à $C_8$,

la viscosité intrinsèque (mesurée conformément à la norme DIN ISO 1628-1 (octobre 1999) dans la décaline à 135°C) de la fraction XCS du copolymère hétérophasique étant ≤ 2,0 dl/g, et
(B) de 1 à 10 % en poids d'une charge inorganique,

laquelle composition ne contient pas d'agent de β-nucléation.

**2.** Composition de polyoléfine selon la revendication 1, **caractérisée en ce que** la viscosité intrinsèque de la fraction XCS du copolymère hétérophasique est ≤ 1,8 dl/g, plus préférablement ≤ 1,5 dl/g, le plus préférablement de 1,0 dl/g.

**3.** Composition de polyoléfine selon la revendication 1 ou 2, **caractérisée en ce que** la quantité de charge inorganique est de 1 à 5 % en poids.

**4.** Composition de polyoléfine selon l'une quelconque des revendications 1 à 3, **caractérisée en ce que** le copolymère de caoutchouc d'éthylène est un caoutchouc d'éthylène/propylène (EPR) ou un caoutchouc d'éthylène/1-octène.

**5.** Composition de polyoléfine selon l'une quelconque des revendications 1 à 4, **caractérisée en ce que** le copolymère de propylène hétérophasique contient de 30 à 35 % en poids du copolymère de caoutchouc d'éthylène.

**6.** Composition de polyoléfine selon l'une quelconque des revendications 1 à 5, **caractérisée par** une valeur de retrait déterminée conformément à l'équation :

```
retrait [%] < 1,6 - (0,08 x quantité de charge inorganique
[% en poids]).
```

**7.** Utilisation d'une composition de polyoléfine selon l'une quelconque des revendications 1 à 6 pour la production de pièces d'automobile, en particulier de carénages en plastique souple, de garnitures latérales, de bas de caisse et d'ailes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1236769 A

- JP 9031259 A